# EUROPÄISCHE PATENTANMELDUNG

(11) **EP 1 645 815 A1**
(43) Veröffentlichungstag der Anmeldung: **12.04.2006**
(21) Anmeldenummer: 05021621.7
(22) Anmeldetag: 04.10.2005
(51) Int. Cl.: F24H 4/02, F24H 9/06

(54) **Sorptionsgerät**

(30) Priorität: 08.10.2004 DE 202004015674 U
(71) Anmelder: Viessmann Werke GmbH & Co. KG, 35107 Allendorf (DE)
(72) Erfinder: Stricker, Marc, Dr., 35037 Marburg (DE); Dippel, Rainer, 35066 Frankenberg (DE)
(74) Vertreter: Wolf, Günter

(57) **Zusammenfassung**

Die Erfindung betrifft ein Sorptionsgerät zum Heiz und/oder Kühlen, umfassend ein Gehäuse (1), in dem ein Wärmeerzeuger (2), ein periodisch ein Kältemittel ad- und desorbierender Sorber (3), ein Kondensator (4) und ein verdampfer (5) angeordnet sind. Nach der Erfindung ist vorgesehen, dass das Gehäuse (1) wandhängend ausgebildet ist.

## Beschreibung

Die Erfindung betrifft ein Sorptionsgerät zum Heizen und/oder Kühlen gemäß dem Oberbegriff des Patentanspruchs 1.

Ein derartiges Sorptionsgerät ist beispielsweise nach der DE 199 02 695 A1 bekannt. Dieses besteht aus einem Gehäuse, in dem ein Wärmeerzeuger, ein periodisch ein Kältemittel ad- und desorbierender Sorber (auf Zeolith-Basis), ein Kondensator und ein Verdampfer angeordnet sind. Bei dieser bezüglich des maximal erreichbaren Wirkungsgrades weniger günstigen Lösung sind dabei ferner Kondensator und Verdampfer als ein gemeinsames, im unteren Bereich des Gehäuses angeordnetes Bauteil ausgebildet.

Diese Konstruktion ist offensichtlich als bodenstehendes Gerät ausgebildet. Gleiches gilt für das mit mehreren Sorbermodulen ausgerüstete Gerät gemäß der DE 199 61 629 A1. Siehe hierzu ferner das im Internt unter http://www.vaillant.de verfügbare und den Anmeldungsunterlagen beigefügte Dokument zu einem Sorptionsgerät mit den Außenmaßen 1610 x 615 x 590 mm.

Diese Lösungen sind somit aufgrund ihrer Größe regelmäßig ausschließlich für den Betrieb als bodenstehendes Zentralheizgerät im Keller bzw. Heizungsraum eines Gebäudes vorgesehen. Der Erfindung liegt die Aufgabe zugrunde, derartige Geräte auch als Etagenheizgerät einsetzen zu können, und zwar ohne auf eine Stellfläche angewiesen zu sein.

Diese Aufgabe wird mit einem Sorptionsgerät der eingangs genannten Art durch die im Kennzeichen des Patentanspruchs 1 aufgeführten Merkmale gelöst.

Nach der Erfindung ist also vorgesehen, dass das Gehäuse wandhängend ausgebildet ist. Diese erfindungsgemäße Maßgabe ermöglich den Einsatz derartiger Sorptionsgeräte auch als Etagenheiz- bzw. Kühlgerät.

Andere vorteilhafte Weiterbildungen ergeben sich aus den abhängigen Patentansprüchen.

Das erfindungsgemäße Sorptionsgerät einschließlich seiner vorteilhaften Weiterbildungen wird nachfolgend anhand der zeichnerischen Darstellung eines Ausführungsbeispiels näher erläutert.

Es zeigt
- Figur 1: in perspektivischer Ansicht das erfindungsgemäße Sorptionsgerät in Anordnung neben weiteren schrankartigen Elementen; und
- Figur 2: im Schnitt von der Seite als Prinzipskizze das wandhängende Sorptionsgerät gemäß Figur 1.

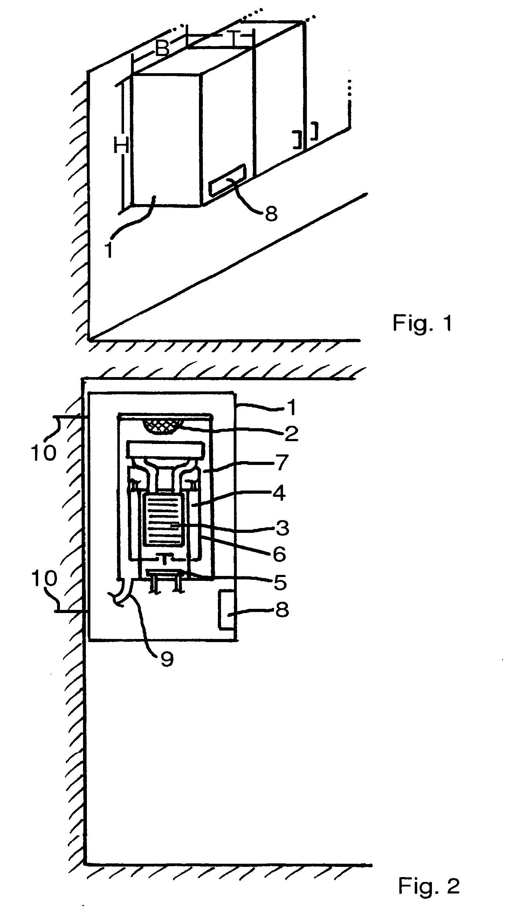

Das in den Figuren 1 und 2 dargestellte Sorptionsgerät besteht aus einem Gehäuse 1, in dem ein Wärmeerzeuger 2, ein periodisch ein Kältemittel ad- und desorbierender Sorber 3 (vorzugsweise aus einem mit Zeolith beschichteten Wärmetauscher gebildet), ein Kondensator 4 und ein Verdampfer 5 angeordnet sind.

Die prinzipielle Funktion derartiger Sorptionsgeräte ist in den oben genannten Schriften ausführlich erläutert. Auf diese wird insoweit an dieser Stelle verwiesen.

Um das Sorptionsgerät beispielsweise nicht nur als Zentral-, sondern auch als Etagenheizgerät möglichst platzsparend einsetzen zu können, ist erfindungsgemäße vorgesehen, dass das Gehäuse 1 wandhängend ausgebildet ist. Zur Befestigung an der Wand dienen dabei, wie dargestellt, beispielsweise in der Wand mit Dübeln verankerte Schrauben 10.

Damit sich das Sorptionsgerät dabei möglichst formschlüssig beispielsweise in eine möglicherweise vorgesehene Küchenzeile einreiht, ist vorteilhaft vorgesehen, dass das Gehäuse 1 maximale Aussenmaße von 600 x 900 x 550 mm aufweist, wobei das erste Maß die Breite B (typisches Rastermaß), das zweite Maß die Höhe H und das dritte Maß die Tiefe T angibt. Dabei weist das Gehäuse 1 vorzugsweise ein optisch zu benachbart angeordneten Schränken oder Geräten angepasstes Oberflächendesign auf.

Um einen möglichst kompakten Innenaufbau des Sorptionsgerätes realisieren zu können, ist darüber hinaus vorgeteilhaft vorgesehen, dass der Sorber 3 in einem zumindest abschnittsweise mindestens doppelwandigen, jedenfalls teilweise den Kondensator 4 bildenden Behälter 6 angeordnet ist. Im Unterschied zur vorgenannten DE 199 02 695 A1 ergibt sich bei dieser Lösung der Vorteil, dass trotz kompakter Bauweise ein hoher Wirkungsgrad erreichbar ist.

Um darüber hinaus auch noch die im Abgas des Wärmeerzeugers enthaltene Wärmeenergie wirkungsgradgünstig nutzen zu können, ist ferner vorteilhaft vorgesehen, dass dem Wärmeerzeuger 2 ein Abgaswärmetauscher 7 nachgeschaltet ist, der den mindestens abschnittsweise doppelwandigen Behälter 6 als weitere Umhüllung umschließt. In Figur 2 strömt das vom Wärmeerzeuger 2 kommende Abgas also am Kondensator 4 vorbei nach unten zum Verdampfer 5 und von dort zu dem andeutungsweise dargestellten Abgasabfuhranschluss 9, der mit einem Abgassystem in Verbindung steht.

Um das Sorptionsgerät insbesondere bei der Montage gut handhaben zu können, ist vorzugsweise vorgesehen, dass dessen Gesamtgewicht weniger als 90 kg beträgt. Diese Maßgabe wird durch Verwendung nur eines Sorbermoduls und entsprechend leichte Einzelkomponenten erreicht.

Damit das Sorptionsgerät ähnlich wie ein Gaswandheizgerät nutzbar ist, ist ferner vorzugsweise vorgesehen, dass wahlweise im oder am Gehäuse 1 die Regelungs- 8, Heizkreis- und (insbesondere Niedertemperatur-) Wärmequellenanschlusskomponenten angeordnet sind.

Der Wärmeerzeuger 2 ist vorzugsweise als Brenner für flüssige oder gasförmige Brennstoffe, d. h. als Öl- oder Gasbrenner ausgebildet, und weist dabei vorzugsweise eine Wärmeleistung von bis zu 32 kW auf. Der Sorber weist ferner vorzugsweise eine Wärmeleistung von bis zu 10 kW auf.

Je nach Bedarf und angestrebten Wirkungsgrad ist darüber hinaus vorgesehen (nicht zeichnerisch dargestellt), dass das Gehäuse 1 derart ausgebildet ist, dass der Wärmeerzeuger 2 wahlweise raumluftunabhängig oder raumluftabhängig betreibbar ist. Im ersten Fall wäre also dafür gesorgt, dass dem Wärmeerzeuger 2 die Verbrennungsluft in bekannter Weise von außerhalb vorzugsweise unter Nutzung der Abgaswärme zugeführt wird. Im zweiten Fall erhält der Wärmeerzeuger 2 die Verbrennungsluft direkt aus dem Raum, in dem das Sorptionsgerät aufgehängt ist.

Schließlich ist zur Brauchwassererzeugung vorteilhaft vorgesehen (nicht zeichnerisch dargestellt), dass im Gehäuse 1 Komponenten wie Brauchwasserspeicher und Brauchwasserwärmetauscher angeordnet sind.

### Bezugszeichenliste

- 1: Gehäuse
- 2: Wärmeerzeuger
- 3: Sorber
- 4: Kondensator
- 5: Verdampfer
- 6: Behälter
- 7: Abgaswärmetauscher
- 8: Regelungskomponenten
- 9: Abgasabfuhranschluss
- 10: Schraube

## Patentansprüche

1. Sorptionsgerät zum Heiz und/oder Kühlen, umfassend ein Gehäuse (1), in dem ein Wärmeerzeuger (2), ein periodisch ein Kältemittel ad- und desorbierender Sorber (3), ein Kondensator (4) und ein Verdampfer (5) angeordnet sind,
**dadurch gekennzeichnet,**
**dass** das Gehäuse (1) wandhängend ausgebildet ist.

2. Sorptionsgerät nach Anspruch 1,
**dadurch gekennzeichnet,**
**dass** das Gehäuse (1) maximale Aussenmaße von 600 x 900 x 550 mm aufweist.

3. Sorptionsgerät nach Anspruch 1 oder 2,
**dadurch gekennzeichnet,**
**dass** der Sorber (3) in einem zumindest abschnittsweise mindestens doppelwandigen, jedenfalls teilweise den Kondensator (4) bildenden Behälter (6) angeordnet ist.

4. Sorptionsgerät nach Anspruch 3,
**dadurch gekennzeichnet,**
**dass** dem Wärmeerzeuger (2) ein Abgaswärmetauscher (7) nachgeschaltet ist, der den mindestens abschnittsweise doppelwandigen Behälter (6) als weitere Umhüllung umschließt.

5. Sorptionsgerät nach einem der Ansprüche 1 bis 4,
**dadurch gekennzeichnet,**
**dass** das Gehäuse (1) ein optisch zu benachbart angeordneten Schränken oder Geräten angepasstes Oberflächendesign aufweist.

6. Sorptionsgerät nach einem der Ansprüche 1 bis 5,
**dadurch gekennzeichnet,**
**dass** das Gesamtgewicht des Gerätes weniger als 90 kg beträgt.

7. Sorptionsgerät nach einem der Ansprüche 1 bis 6,
**dadurch gekennzeichnet,**
**dass** wahlweise im oder am Gehäuse (1) die Regelungs- (8), Heizkreis- und Wärmequellenanschlusskomponenten (9) angeordnet sind.

8. Sorptionsgerät nach einem der Ansprüche 1 bis 7,
**dadurch gekennzeichnet,**
**dass** der Wärmeerzeuger (2) als Brenner für flüssige oder gasförmige Brennstoffe ausgebildet ist, wobei vorzugsweise das Gehäuse (1) derart ausgebildet ist, dass der Wärmeerzeuger (2) wahlweise raumluftunabhängig oder raumluftabhängig betreibbar ist.

9. Sorptionsgerät nach einem der Ansprüche 1 bis 8,
**dadurch gekennzeichnet,**
**dass** der Wärmeerzeuger (2) eine Wärmeleistung von bis zu 32 kW aufweist, wobei vorzugsweise der Sorber (3) eine Wärmeleistung von bis zu 10 kW aufweist.

10. Sorptionsgerät nach einem der Ansprüche 1 bis 9,
**dadurch gekennzeichnet,**
**dass** im Gehäuse (1) Komponenten zur Brauchwassererzeugung wie Brauchwasserspeicher und Brauchwasserwärmetauscher angeordnet sind.
